# EUROPEAN PATENT APPLICATION

(11) **EP 4 785 773 A1**
(43) Date of publication of application: **05.08.2026**
(21) Application number: 25222502.4
(22) Date of filing: 11.12.2025
(51) Int. Cl.: A01D 34/00

(54) **A ROBOTIC LAWN MOWER WITH LIFT DETECTION**

(30) Priority: 30.01.2025 SE 2550086
(71) Applicant: Husqvarna AB, 561 82 Huskvarna (SE)
(72) Inventor: Andersson, Tom, 561 82 Huskvarna (SE)

(57) **Abstract**

The present disclosure relates to a robotic lawn mower (100) comprising a body (140), a control unit (110), at least one rotatable grass cutting disc (160) having a disc rotation axle (165), at least one pair of drive wheels (131A, 131B), and at least one further wheel (130A, 130B), where the wheels (130A, 130B; 131A, 131B) are adapted to contact ground (G) during normal operation. The robotic lawn mower (100) further comprises a camera arrangement (170) having a field of view (171, 171', 171") with a certain extent (178, 178', 178"), where the camera arrangement (170) comprises a lens (172) and an image sensor (173), and is attached to a chassis part (145) that is movable (M) relative to a body part (141) comprised in the body (140). The lens (172) faces an aperture (142, 342) that at least partly is formed in the body part (141), the extent (178, 178', 178") of the field of view (171, 171', 171") being changed when the body part (141) is moved relative to the chassis part (145) such that the position or size of the aperture (142, 342) is changed.

## Description

### TECHNICAL FIELD

The present disclosure relates to a robotic lawn mower comprising a body, a control unit, at least one rotatable grass cutting disc having a disc rotation axle, at least one pair of drive wheels, and at least one further wheel, where the wheels are adapted to contact ground during normal operation. The robotic lawn mower further comprises a camera arrangement having a field of view with a certain extent.

### BACKGROUND

Robotic lawn mowers, such as for example robotic lawn mowers, are becoming increasingly more popular. A robotic lawn mower is usually battery-powered by means of a rechargeable battery and is adapted to cut grass on a user's lawn automatically. A robotic lawn mower can be charged automatically without intervention of the user, and does normally not need to be manually managed after being set once.

In a typical deployment a work area, such as a garden, park, sports field, golf court and the like, the work area is enclosed by a boundary that can be in the form of a boundary wire with the purpose of keeping the robotic lawn mower inside the work area. An electric control signal may be transmitted through the boundary wire thereby generating an (electro-) magnetic field emanating from the boundary wire. The robotic working tool is typically arranged with one or more sensors adapted to sense the control signal.

Alternatively, or as a supplement, the robotic lawn mower can be equipped with a navigation system that is adapted for satellite navigation by means of GPS (Global Positioning System) or some other Global Navigation Satellite System (GNSS) system, for example using Real Time Kinematic (RTK). A boundary is in this case not defined by a physical wire, but by a virtual boundary.

It is desired to detect if the robotic lawn mower has been lifted away from ground, such that robotic lawn mower no longer is mainly supported by its wheels. This is for example due to a desire, or requirement, to prevent injuries.

There exist several methods and devices for such detection, for example using sensors that detect if supporting wheels leave ground.

EP 3102914 B2 discloses Hall sensors that are arranged in one part of a robotic work tool, such as the chassis, and a magnet in another part of the robotic work tool, such as the body. By detecting how the magnet moves in relation to the Hall sensors, it can be determined whether a lift has occurred.

EP 3911973 B1 discloses using radar sensors to determine a sensed distance to a surface travelled and to determine whether the sensed distance implies a lift event.

It is, however, desired to provide a robotic lawn mower that comprises means for detecting if the robotic lawn mower has been lifted away from ground, such that robotic lawn mower no longer is mainly supported by its wheels, in a more reliable and less complicated manner than as depicted in prior art.

### SUMMARY

The object of the present disclosure is to provide means for efficient, reliable and uncomplicated detection of a robotic lawn mower has been lifted away from ground.

This object is achieved by means of a robotic lawn mower robotic lawn mower comprising a body, a control unit, at least one rotatable grass cutting disc having a disc rotation axle, at least one pair of drive wheels, and at least one further wheel, where the wheels are adapted to contact ground during normal operation. The robotic lawn mower further comprises a camera arrangement having a field of view with a certain extent, where the camera arrangement comprises a lens and an image sensor, and is attached to a chassis part that is movable relative to a body part comprised in the body. The lens faces an aperture that at least partly is formed in the body part, where the extent of the field of view is changed when the body part is moved relative to the chassis part such that the position or size of the aperture is changed.

This enables detection of if the robotic lawn mower has been lifted from the ground by using an already existing sensor device in for of the camera arrangement. This is of course efficient and reliable, and does not incur any costs during manufacturing for additional parts that are required and need to be mounted.

According to some aspects, the field of view has decreased to a certain extent when most wheels lack contact with ground, the field of view being obscured to a certain degree by the body part, where the control unit is adapted to determine that the robotic lawn mower has been lifted off the ground when the field of view has decreased to said certain extent.

This means that the field of view has to be decreased to a certain degree or extent before the control unit determines that the robotic lawn mower has been lifted off the ground. In this manner, false detections of the robotic lawn mower having been lifted off the ground are avoided.

According to some aspects, the image sensor has a top side that is adapted to face away from ground during normal operation of the robotic lawn mower, and a bottom side that is adapted to face ground during normal operation of the robotic lawn mower. The field of view decreases from the bottom side towards the top side when the robotic lawn mower is being lifted. In this manner, it can be determined in a reliable manner that the robotic lawn mower is being lifted.

According to some aspects, the image sensor comprises a pixel array, where, when the number of pixels that are obscured by the body part increases to a certain degree that corresponds to a threshold distance due to the robotic lawn mower being lifted, the control unit is adapted to determine that the robotic lawn mower has been lifted off the ground. In this manner, false detections of the robotic lawn mower having been lifted off the ground are avoided.

According to some aspects, the aperture is formed in the body part. According to some further aspects, the aperture is formed by the body part and an environment protection roof that is fixed relative to the camera arrangement. The aperture can thus be formed in several ways.

This object is also achieved by means of methods, control unit arrangements and computer program products that are associated with above advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present disclosure will become apparent when studying the appended claims and the following description. The skilled person realizes that different features of the present disclosure may be combined to create embodiments other than those described in the following, without departing from the scope of the present disclosure.

### BRIEF DESCRIPTION OF THE DRAWINGS

The present disclosure will now be described more in detail with reference to the appended drawings, where:
- Figure 1: shows a perspective front view of a robotic lawn mower;
- Figure 2A: shows a schematic side view of the robotic lawn mower in a first position;
- Figure 2B: shows a detail cut-open side view of the robotic lawn mower in the first position;
- Figure 2C: shows a schematic front view of an image sensor when the robotic lawn mower is in the first position;
- Figure 3A-3C: correspond to Figure 2A-2C for a second position of the robotic lawn mower;
- Figure 4A-4C: correspond to Figure 2A-2C for a third position of the robotic lawn mower;
- Figure 5: shows a computer program product;
- Figure 6: shows a schematic overview of the robotic lawn mower;
- Figure 7: shows a flowchart for methods according to the present disclosure;
- Figure 8: corresponds to Figure 3B and shows an alternative aperture;
- Figure 9: shows a schematic side view of the robotic lawn mower where the body is displaced by contact with an obstacle; and
- Figure 10: shows a perspective front view of an alternative robotic lawn mower.

### DETAILED DESCRIPTION

Aspects of the present disclosure will now be described more fully hereinafter with reference to the accompanying drawings. The different devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the present disclosure. As used herein, the singular forms "a", "an" and "the" are intended to include the plural forms as well, unless the context clearly indicates otherwise.

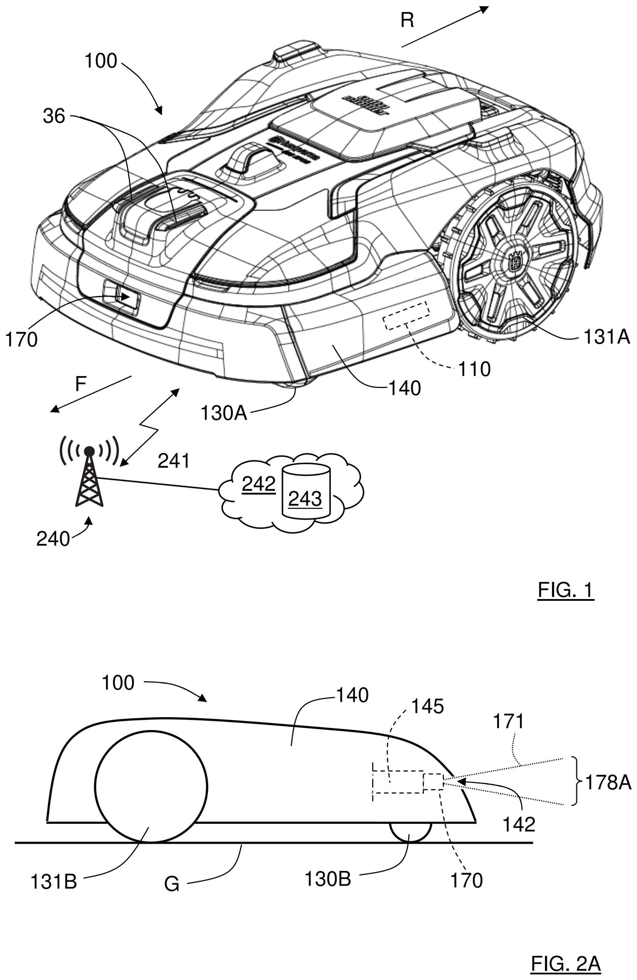

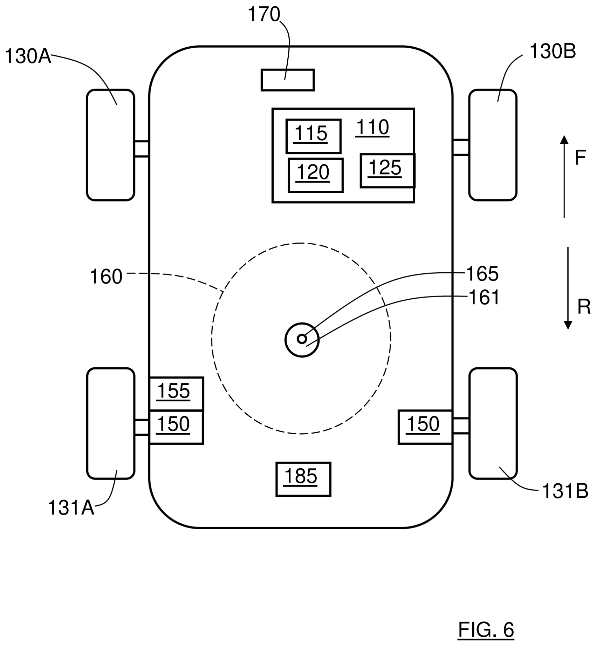

In the following, it is referred to Figure 1 and Figure 6. Figure 1 shows a perspective side view of a robotic lawn mower 100 and Figure 6 shows a schematic overview of the robotic lawn mower 100.

The robotic lawn mower 100 comprises a body 140 and is according to some aspects adapted for a forward travelling direction D and a reverse travelling direction R.

The robotic lawn mower 100 further comprises at least one pair of drive wheels 131A, 131B, at least one further wheel 130A, 130B, and at least one rotatable grass cutting disc 160, having a disc rotation axle 165. In this example, the at least one further wheel is constituted by two swivelable wheels 130A, 130B, but could be constituted by one or more other types of wheel, and even one or more further drive wheels. The wheels 130A, 130B; 131A, 131B are adapted to contact ground G during normal operation, where the term normal operation relates to normal operation of the robotic lawn mower 100.

According to some aspects, the rotatable cutting disc 160 is driven by a cutter motor 161, and the drive wheels 131A, 131B are drivably connected to an electric drive wheel motor 150.

According to some further aspects, the robotic lawn mower 100 further comprises a rechargeable electric power source 155, such as a battery 155, adapted to provide power to the electric motors 150, 16,1 and a charging reception arrangement 36, for example in the form of charging skids. The charging reception arrangement 36 is adapted to be electrically connected to a charging transmission arrangement at a charging station (not shown).

The robotic lawn mower 100 further comprises a control unit 110 and an environmental detection system that comprises at least one camera arrangement 170. According to some further aspects, the control unit 110 is adapted to control and position the robotic lawn mower 100 by means of input derived from the environmental detection system.

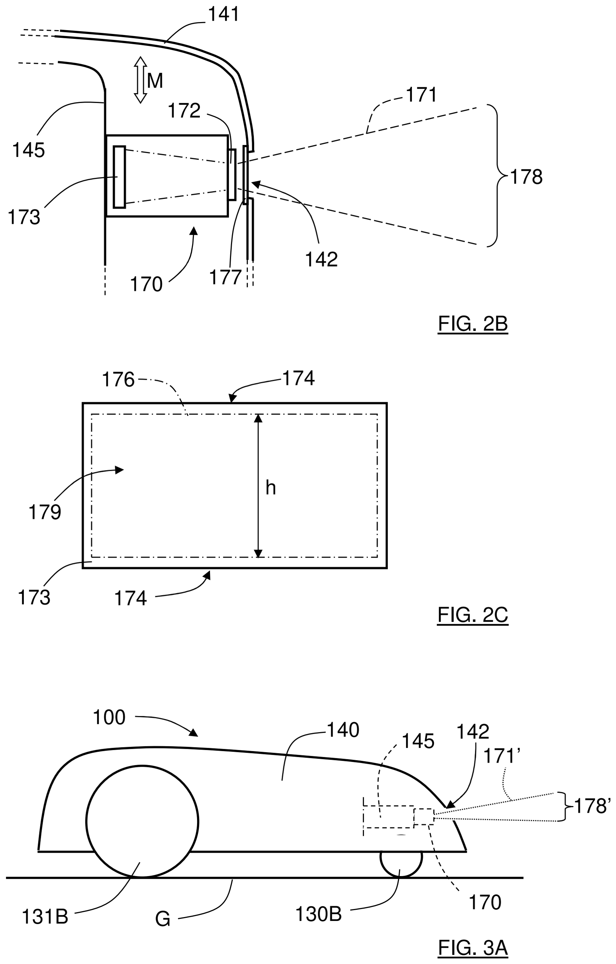

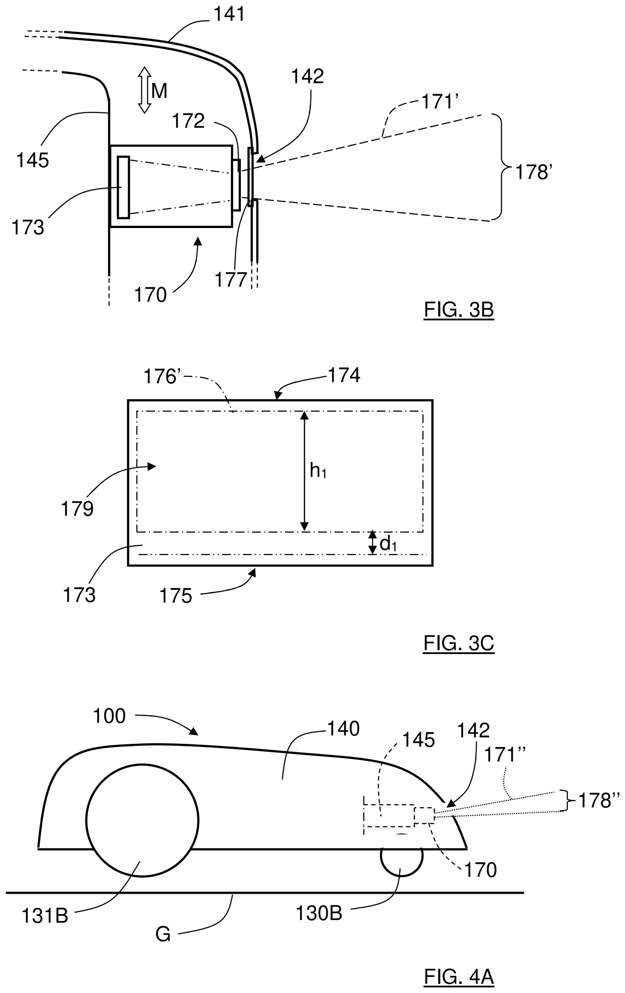

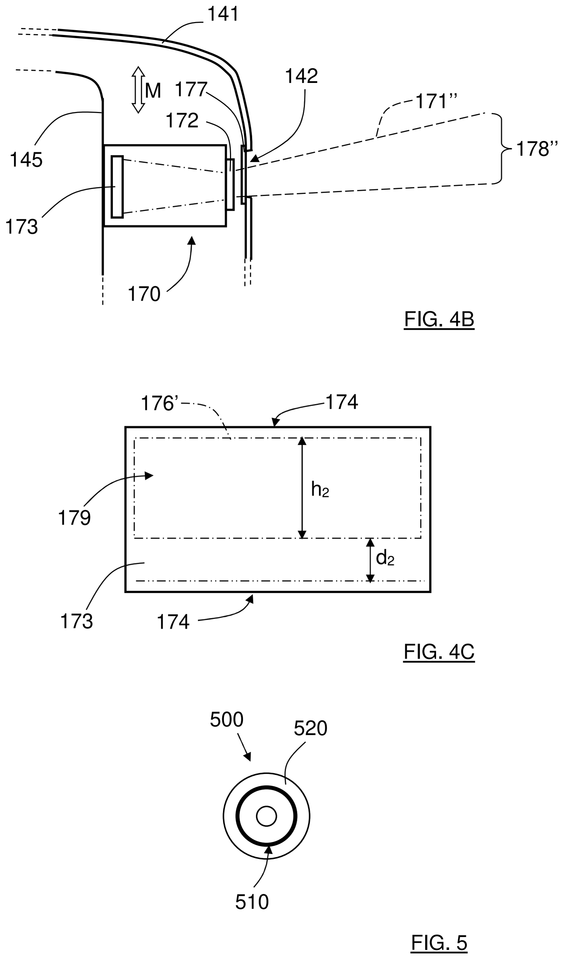

In the following the present disclosure will be described also with reference to Figure 2A-2C, Figure 3A-3C and Figure 4A-4C. Figure 2A shows a schematic side view of the robotic lawn mower 100 in a first position, Figure 2B shows a detail cut-open side view of the robotic lawn mower 100 in the first position and Figure 2C shows a schematic front view of an image sensor 173 when the robotic lawn mower 100 is in the first position. Figure 3A-3C and Figure 4A-4C correspond to Figure 2A-2C for a second position and third position, respectively, of the robotic lawn mower 100.

The camera arrangement 170 has a field of view 171, 171', 171" with a certain extent 178, 178', 178", where the camera arrangement 170 comprises a lens 172 and an image sensor 173, and is attached to a chassis part 145 that is movable M relative to a body part 141 comprised in the body 140. It is to be understood that the body part 141 can be a part of the body 140, or be constituted by the body 140. The extent 178, 178', 178" of the field of view may according to some aspects be regarded as an effective field of view of objects that are positioned at a distance from the robotic lawn mower 100. The extent 178, 178', 178" of the field of view may according to some aspects be defined in terms of angular extents in azimuth and elevation, preferably in relation to a boresight direction for the camera arrangement 170. The extent 178, 178', 178" of the field of view may according to some aspects be regarded as an effective coverage for the camera arrangement 170.

The lens 172 faces an aperture 142, that at least partly is formed in the body part 141. According to some aspects, as illustrated, the aperture 142 may be covered by a protective window 177 such as a glass wall or a plastic wall. According to the present disclosure, the extent 178, 178', 178" of the field of view 171, 171', 171" is changed when the body part 141 is moved relative to the chassis part 145 such that the position or size of the aperture 142, 342 is changed. According to some aspects, as illustrated in this example, the aperture 142 is formed in the body part 141, and here the position of the aperture 142 is changed.

In Figure 2A-2C, the robotic lawn mower 100 is in a first position that corresponds to normal operation, having a first field of view 171. In Figure 3A-3C the robotic lawn mower 100 is in a second position that corresponds to a slightly elevated position, being partly lifted from the ground G, having a second field of view 171' that is decreased compared to the first field of view 171. In Figure 4A-4C the robotic lawn mower 100 is in a third position that corresponds to being lifted from the ground G, having a third field of view 171" that is decreased compared to the second field of view 171'. According to some aspects, when a field of view is decreased, or increased, it is the extent of the field of view that is decreased, or increased.

It is evident that due to the movement of the body part 141 relative to the chassis part 145 and thus to the camera arrangement 170, the field of view 171, 171', 171" is decreased the more the robotic lawn mower 100 is lifted. This enables detection of if the robotic lawn mower 100 has been lifted from the ground G by using an already existing sensor device in form of the camera arrangement 170. This is of course efficient and reliable, and does not incur any costs during manufacturing for additional parts that are required and need to be mounted.

According to some aspects, as illustrated for the third position in Figure 4A-4C, the field of view 171" has decreased to a certain extent 178" when most, or all, wheels 130A, 130B; 131A, 131B lack contact with ground G, the field of view 171, 171', 171" being obscured to a certain degree by the body part 141. The control unit 110 is adapted to determine that the robotic lawn mower 100 has been lifted off the ground when the field of view 171" has decreased to said certain extent 178". This means that the field of view has to be decreased to a certain degree or extent before the control unit 110 determines that the robotic lawn mower 100 has been lifted off the ground. In this manner, false detections of the robotic lawn mower 100 having been lifted off the ground G are avoided.

According to some aspects, the image sensor 173 has a top side 174 that is adapted to face away from ground G during normal operation of the robotic lawn mower 100, and a bottom side 175 that is adapted to face ground G during normal operation of the robotic lawn mower 100. The field of view 171, 171', 171" decreases from the bottom side 175 towards the top side 174 when the robotic lawn mower 100 is being lifted. This is illustrated in Figure 2C, Figure 3C and Figure 4C where it is shown how the image sensor 173 is more and more obscured by the body part 141 as the robotic lawn mower 100 is lifted more and more. In this manner, it can be determined in a reliable manner that the robotic lawn mower 100 is being lifted.

Should the field of view 171, 171', 171" instead decrease from the top side 174 towards the bottom side 175, this would indicate that the robotic lawn mower 100 instead would be pressed towards the ground G, for example by a user or by fallen debris. For a relatively large robotic lawn mower 100, this could indicate that a person is trying to ride on the robotic lawn mower 100, and suitable actions could be taken.

According to some aspects, the image sensor 173 comprises a pixel array 179 having an initial height h. When the number of pixels that are obscured by the body part 141 increases to a certain degree that corresponds to a threshold distance d₂ due to the robotic lawn mower 100 being lifted, the control unit 110 is adapted to determine that the robotic lawn mower 100 has been lifted off the ground G. In this manner, false detections of the robotic lawn mower 100 having been lifted off the ground G are avoided.

The threshold distance d₂ indicates an obscured distance from a bottom of the pixel array 179, where the obscured distance d₁, d₂ is indicative of pixels that are obscured by the body part 141. When the obscured distance is zero, no pixels are considered to be obscured by the body part 141. In this context, pixels being obscured means that the level of incident light decreases such that the field of view decreases, from the bottom side 175 towards the top side 174. Exactly how this is measured and determined is not described in detail here since there exists a plurality of ways to achieve this, which all are obvious to the skilled person. According to some aspects, obscured pixels do not contribute to providing useful images of objects at a distance from the robotic lawn mower 100.

In Figure 2C, during normal operation with the first field of view 171, no pixels are considered to be obscured by the body part 141.

In Figure 3C, when the field of view has decreased to the second field of view 171', the image sensor 173 and its pixels 179 are obscured by the body part 141 such that the height of the pixels 179 which are not obscured by the body part 141 has decreased to a first distance h₁. Correspondingly, the pixels 173 that are obscured by the body part 141 has increased to a first obscured distance d₁.

In Figure 4C, when the field of view has decreased to the third field of view 171", the image sensor 173 and its pixels 179 are obscured by the body part 141 such that the height of the pixels 179 which are not obscured by the body part 141 has decreased to a second distance h₂. Correspondingly, the pixels 173 that are obscured by the body part 141 has increased to a second obscured distance d₂.

The obscured distance d₁, d₂ increases from the bottom side 175 towards the top side 174 when the robotic lawn mower 100 is being lifted which indicates that the robotic lawn mower 100 is being lifted. Should the obscured distance increase from the top side 174 towards the bottom side 175 this would indicate that the robotic lawn mower 100 instead would be pressed towards the ground G as discussed above.

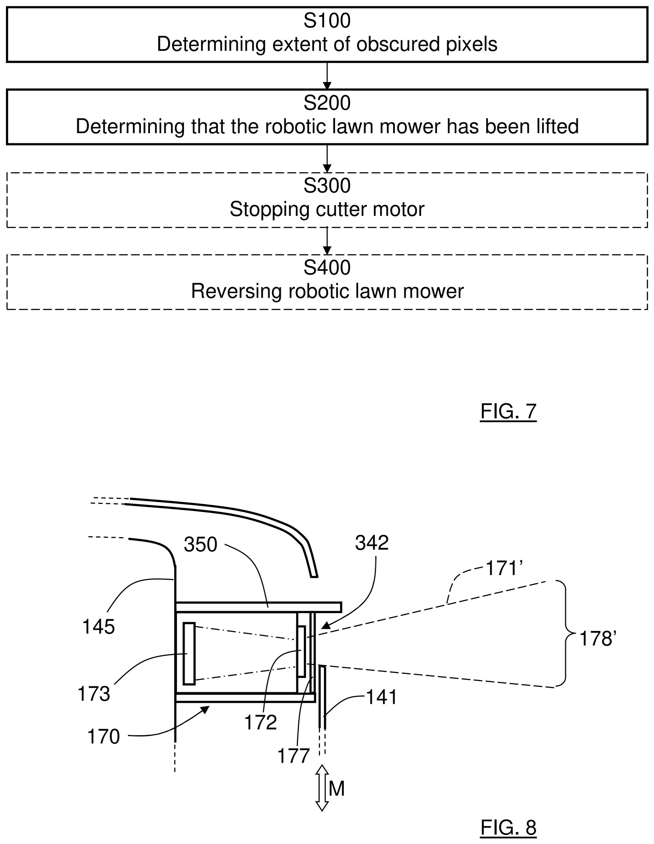

According to some aspects, as illustrated in Figure 8 that corresponds to Figure 3B, the aperture 342 is formed by the body part 141 and an environment protection roof 350 that is fixed relative to the camera arrangement 170 and is according to some further aspects adapted to provide environment protection to the camera arrangement 170. This means that when the robotic lawn mower 100 is lifted, the size of the aperture 342 is changed since the body part moves upward from below the camera arrangement 170, while the protection roof 350 remains fixed relative to the camera arrangement 170. The obscured distance increases in the same way as described above.

With reference also to Figure 7, the present disclosure also relates to a computer-implemented method performed by a robotic lawn mower control unit 110. The method comprises determining S100 to which extent pixels 179, comprised in an image sensor 173 of a camera arrangement 170 used in a robotic lawn mower 100, are obscured by a body part 141 of the robotic lawn mower 100, the extent corresponding to a certain distance d₁, d₂. The body part 141 is movable with respect to the camera arrangement 170 where an aperture 142, 342 at least partly is formed in the body part 141. During normal operation of the robotic lawn mower 100, the aperture 142 admits an amount of light to pass to the image sensor pixels 179 such that a certain operational field of view 171 is obtained for the camera arrangement 170. When the body part 141 is moved, the body part 141 is allowed to obscure and decrease said field of view 171 as the position or size of the aperture 142, 342 is changed. The method further comprises determining S200 that the robotic lawn mower 100 has been lifted off the ground G when said extent exceeds a certain threshold distance d₂.

This enables detection of if the robotic lawn mower 100 has been lifted from the ground 100 by using an already existing sensor device, the camera arrangement 170. This is of course efficient, reliable and does not incur any costs during manufacturing for additional parts that need to be mounted.

According to some aspects, when having determined that the robotic lawn mower 100 has been lifted off the ground G, the method comprises stopping S300 a cutter motor 161 that is used for propelling a rotatable grass cutting disc 160 of the robotic lawn mower 100. This provides a high degree of safety, preventing an exposed and moving cutting disc from inflicting injuries.

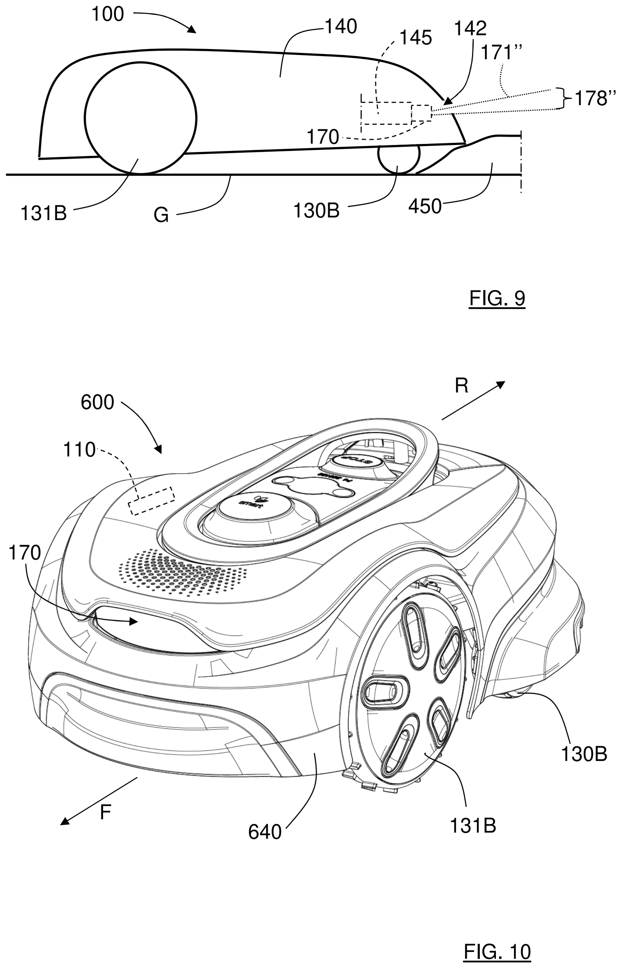

According to some aspects, with reference also to Figure 9, when having determined that the robotic lawn mower 100 has been lifted off the ground G, the method comprises reversing S400 the robotic lawn mower 100. This means that when it has been determined that the robotic lawn mower 100 has been lifted off the ground G, the robotic lawn mower 100 may in fact have struck or collided with an object 450 that can lift the body 140 such that the body part is lifted and provides the same type of decreased field of view 178" as when the robotic lawn mower 100 has been lifted off the ground G. Such an obstacle 450 may suitably be wedge-shaped such that the body 140 can ride on the obstacle 450 and be displaced relative to the chassis. In order to leave the object 450, the robotic lawn mower 100 is controlled to reverse, i.e., to move in the reverse travelling direction R.

However, the first action that should be taken when having determined that the robotic lawn mower 100 has been lifted off the ground G, is normally to stop the cutter motor 161 to prevent injuries.

As indicated in Figure 1, according to some aspects, the control unit 110 may be adapted to be in contact, suitably by means of wireless communication 241, with external units, for example a communication system 240. This may, e.g., be a third generation partnership program (3GPP) defined access network like the fourth generation (4G) or the fifth generation (5G) access networks or a satellite system such as GPS. The access network may provide access to remote networks and other resources such as, e.g., the Internet.

It is also appreciated that some processing functions may be performed by resources in a remote network 242, such as a remote server 243.

The control unit 110 may be constituted by one or more control unit parts that can be separate from each other. Some or all control unit parts may be comprised in a control unit arrangement 110 and/or a remote server 243.

In Figure 6 it is schematically illustrated, in terms of a number of functional units, the components of the control unit 110 according to embodiments of the discussions herein. Processing circuitry 115 is provided using any combination of one or more of a suitable central processing unit CPU, multiprocessor, microcontroller, digital signal processor DSP, etc., capable of executing software instructions stored in a computer program product, e.g. in the form of a storage medium 120. The processing circuitry 115 may further be provided as at least one application specific integrated circuit ASIC, or field programmable gate array FPGA. The processing circuitry thus comprises a plurality of digital logic components.

Particularly, the processing circuitry 115 is configured to cause the control unit 110 to perform a set of operations, or steps to control the operation of the robotic lawn mower 100 including, but not being limited to, controlling the camera arrangement 170, processing images received via the camera arrangement 170, and the propulsion of the robotic lawn mower 100. For example, the storage medium 120 may store the set of operations, and the processing circuitry 115 may be configured to retrieve the set of operations from the storage medium 120 to cause the control unit 110 to perform the set of operations. The set of operations may be provided as a set of executable instructions. Thus, the processing circuitry 115 is thereby arranged to execute at least parts of the methods as herein disclosed.

The storage medium 120 may also comprise persistent storage, which, for example, can be any single one or combination of magnetic memory, optical memory, solid state memory or even remotely mounted memory.

According to some aspects, the control unit 110 further comprises an interface 125 for communications with at least one external device such as a user terminal, the remote server 243 and/or a charging station. As such, the interface 125 may comprise one or more transmitters and receivers, comprising analogue and digital components and a suitable number of ports for wireline communication. The interface 125 can be adapted for communication with other devices, such as the remote server 243, a charging station, and/or other robotic lawn mowers. Examples of such wireless communication devices are Bluetooth^{®}, WiFi^{®} (IEEE802.11b), Global System Mobile (GSM) and LTE

(Long Term Evolution), to name a few. This means that, according to some aspects, other units such as the remote server 243 are adapted to partly execute the methods as herein disclosed.

Generally, the present disclosure also relates to a control unit 110 adapted to execute the methods described herein.

With reference to Figure 5, the present disclosure also relates to a computer program product 500 comprising computer executable instructions 510 stored on media 520 to execute the methods described herein.

The present disclosure is not limited to the examples described herein, but may vary freely within the scope of the appended claims. For example, in the examples described, the drive wheels 131A, 131B are rear wheels. Of course, the drive wheels 131A, 131B can be front wheels as depicted in Figure 10 that shows a perspective front view of an alternative robotic lawn mower 600. According to some aspects, the alternative robotic lawn mower 600 comprises a control unit 110, a body 640 and a camera arrangement 170 of the same type as described for the robotic lawn mower 100 above. All examples described for the robotic lawn mower 100 above are of course applicable for the alternative robotic lawn mower 600 in Figure 10.

The environmental detection system has been described to consist of at least one camera arrangement 170, but other types of sensor devices may according to some aspects also be comprised in the environmental detection system. Such sensor devices may for example include at least one of radar sensors, Lidar sensors and ultrasonic sensors.

## Claims

1. A robotic lawn mower (100) comprising a body (140), a control unit (110), at least one rotatable grass cutting disc (160) having a disc rotation axle (165), at least one pair of drive wheels (131A, 131B), and at least one further wheel (130A, 130B), where the wheels (130A, 130B; 131A, 131B) are adapted to contact ground (G) during normal operation, the robotic lawn mower (100) further comprising a camera arrangement (170) having a field of view (171, 171', 171") with a certain extent (178, 178', 178"), where the camera arrangement (170) comprises a lens (172) and an image sensor (173), and is attached to a chassis part (145) that is movable (M) relative to a body part (141) comprised in the body (140), wherein the lens (172) faces an aperture (142, 342) that at least partly is formed in the body part (141), the extent (178, 178', 178") of the field of view (171, 171', 171") being changed when the body part (141) is moved relative to the chassis part (145) such that the position or size of the aperture (142, 342) is changed.

2. The robotic lawn mower (100) according to claim 1, wherein the field of view (171") has decreased to a certain extent (178") when most wheels (130A, 130B; 131A, 131B) lack contact with ground (G), the field of view (171, 171', 171") being obscured to a certain degree by the body part (141), where the control unit (110) is adapted to determine that the robotic lawn mower (100) has been lifted off the ground when the field of view (171") has decreased to said certain extent (178").

3. The robotic lawn mower (100) according to claim 2, wherein the image sensor (173) has a top side (174) that is adapted to face away from ground (G) during normal operation of the robotic lawn mower (100), and a bottom side (175) that is adapted to face ground (G) during normal operation of the robotic lawn mower (100), where the field of view (171, 171', 171") decreases from the bottom side (175) towards the top side (174) when the robotic lawn mower (100) is being lifted.

4. The robotic lawn mower (100) according to claim 3, wherein the image sensor (173) comprises a pixel array (179), where, when the number of pixels that are obscured by the body part (141) increases to a certain degree that corresponds to a threshold distance (d₂) due to the robotic lawn mower (100) being lifted, the control unit (110) is adapted to determine that the robotic lawn mower (100) has been lifted off the ground (G).

5. The robotic lawn mower (100) according to any one of the previous claims, wherein the aperture (142) is formed in the body part (141).

6. The robotic lawn mower (100) according to any one of the claims 1-4, wherein the aperture (342) is formed by the body part (141) and an environment protection roof (350) that is fixed relative to the camera arrangement (170).

7. A computer-implemented method performed by a robotic lawn mower control unit (110), where the method comprises
determining (S100) to which extent pixels (179), comprised in an image sensor (173) of a camera arrangement (170) used in a robotic lawn mower (100), are obscured by a body part (141) of the robotic lawn mower (100), the extent corresponding to a certain distance (d₁, d₂),
the body part (141) being movable with respect to the camera arrangement (170) where an aperture (142, 342) at least partly is formed in the body part (141), where
- during normal operation of the robotic lawn mower (100), the aperture (142) admits an amount of light to pass to the image sensor pixels (179) such that a certain operational field of view (171) is obtained for the camera arrangement (170), and
- when the body part (141) is moved, the body part (141) is allowed to obscure and decrease said field of view (171) as the position or size of the aperture (142, 342) is changed,
the method further comprising
determining (S200) that the robotic lawn mower (100) has been lifted off the ground (G) when said extent exceeds a certain threshold distance (d₂).

8. The method according to claim 5, wherein, when having determined that the robotic lawn mower (100) has been lifted off the ground (G), the method comprises
stopping (S300) a cutter motor (161) that is used for propelling a rotatable grass cutting disc (160) of the robotic lawn mower (100).

9. The method according to any one of the claims 7 or 8, wherein, when having determined that the robotic lawn mower (100) has been lifted off the ground (G), the method comprises
reversing (S400) the robotic lawn mower (100).

10. A control unit (110) adapted to execute the method according to any one of the claims 7-9.

11. A computer program product (500) comprising computer executable instructions (510) stored on media (520) to execute the method according to any one of the claims 7-9.
